# EUROPEAN PATENT APPLICATION

(11) **EP 2 204 935 A1**
(43) Date of publication of application: **07.07.2010**
(21) Application number: 09305003.7
(22) Date of filing: 05.01.2009
(51) Int. Cl.: H04L 1/00, H04L 5/00

(54) **Multicarrier termination unit with seamless tone ordering table reconfiguration**

(71) Applicant: Alcatel Lucent, 75008 Paris (FR)
(72) Inventor: Van Bruyssel, Danny, 9140 Temse (BE); Ysebaert, Geert, 3020 Winksele (Herent) (BE)
(74) Representative: D'Halleweyn, Nele Veerle Trees Gertrudis

(57) **Abstract**

Termination unit, arranged for communication of data over a channel comprising a plurality of frequency multiplexed sub-channels, and the termination unit comprising a tone ordering table and further comprising receiving means for receiving data to be transmitted over the channel; channel sending means connected to the receiving means and connectable to a communication line for transmitting over the channel the data received by the receiving means, wherein groups of bits to be transmitted over the channel, are each subsequently assigned to one of the sub-channels in accordance with a tone ordering table; channel receiving means connectable to a communication line for receiving data transmitted by a further termination unit over the channel; and tone ordering table change means for changing the tone ordering table without interruption of the data communication, comprising tone ordering table change request determination means connected to the channel receiving means for determining the reception of a tone ordering table change request sent by the further termination unit; tone ordering table change signalling means connected to the channel sending means for determining the moment of tone ordering table change and signalling the moment to the further termination unit; and wherein from the moment of tone ordering table change, the channel sending means assign subsequent bits to be transmitted, in accordance with the tone ordering table determined by the received tone ordering table change request.

## Description

The present invention relates to a Termination unit arranged for communication of data over a channel comprising a plurality of frequency multiplexed sub-channels, and the termination unit comprising a tone ordering table.

Furthermore, the invention relates to a system comprising two termination units and a communication line, connecting the two termination units.

The present invention further relates to a method for communicating data between a first and a second termination unit over a channel comprising a plurality of sub-channels, wherein the termination units comprise a tone ordering table.

The channel is defined as starting at the interface where the user data to be transmitted is given as input to the modem, and ending at the interface where the received user data is given as output by the modem connected to the other end of the communication line. Therefore, the channel includes, on top of the communication line, the following modem functional blocks, well known in the art: a line interface, an analog front-end, analog-to-digital convertors, digital-to-analog convertors, transmit and receive filters, gain scalers, modulation/demodulation, constellation encoding/decoding, channel coding/decoding, forward error correcting coding/decoding, scramblers, CRC generation and verification. As such any parameter which can be measured in any of the functional blocks of the channel constitutes a characteristic of the channel and its sub-channels. The channel characteristic measurement predominantly used in the prior art is the Signal-to-Noise Ratio (SNR) measured at the receiver, for a multi-carrier modulatable channel typically the SNR on each of the sub-channels.

The communication line is a physical medium between the two termination units, over which electrical, optical or electro-magnetic radio signals can travel. For example, this could be a twisted-pair, a coax-cable or an optical fibre. The physical medium may even be the ether in case of the use of electro-magnetic radio signals.

These days, digital subscriber line technology is a popular technology for providing broadband communications. Whereas ADSL is currently the most widely adopted DSL technology, ADSL2 and VDSL2 are emerging in order to provide connections with even higher bandwidth.

In DMT-modulating systems such as xDSL-systems, instead of using a single high bandwidth communication channel, the communication channel is divided into a number, particularly 256 for ADSL, sub-channels wherein each sub-channel comprises its own subcarrier and this subcarrier is modulated according to the data provided to the sub-channel. This technology is known as discrete multitone modulation (DMT modulation). In order to compensate for frequency dependent attenuation and frequency dependent noise, the transmitter will send test sequences during the initialisation of the system, whereafter the receiver analyses the received test sequence in order to determine the attenuation and noise experienced on each individual sub-channel. Based on the analysis the receiver constructs a tone ordering table and further a bit loading table comprised of a bit table and a gain table. The tone ordering table specifies the order wherein the sub-channels are to be provided with collections of bits. The bit table specifies for each sub-channel the amount of bits that is to be transmitted collectively, that means before switching to a next sub-channel according to the tone ordering table. Lastly, the gain table specifies for each sub-channel the gain to be applied. The gain table and tone ordering table are specifically sent to the transmitters in order to allow the transmitter to adapt to the characteristics of all the individual sub-channels. During actual data exchange over the communication channel, the transmitter uses the tone ordering table to determine the individual data rates for all the sub-channels.

Drawback of the prior art described above is that changes of the channel characteristics over time are not accounted for. The attenuation and interference experienced is determined only once during initialisation and remains static. Therefore, the change of channel characteristics over time negatively influences the channel performance.

The present invention is to provide a method to communicate data over an xDSL channel, wherein the channel performance is optimised even when channel characteristics change overtime, while remaining backwards compatible with existing xDSL systems.

Although both termination units are typically sending as well as receiving data, as the communication is normally bidirectional, in this description the phrases "sending termination unit" and "receiving termination unit" refer to the respective sending termination unit and receiving termination unit in a single uni-directional data path. Of course, the sending termination unit is also a receiving termination unit in the uni-directional data path in the reverse direction, and the receiving termination unit is also a sending termination unit in this reverse direction. For simplicities sake, only a single uni-directional data path is described, and the words "sending" and "receiving" in respectively "sending termination unit" and "receiving termination unit" refer to the function in this uni-directional data path. It is further to be noted that the signalling and control involved in a uni-directional data path is bi-directional. Therefore, even when only considering a uni-directional data path, a "sending termination unit", will also receive information, namely signalling and control, and vice versa, a "receiving termination unit" will also send information, namely, again, signalling and control.

A first embodiment of the present invention comprises a first termination unit, arranged for communication of data over a channel comprising a plurality of frequency multiplexed sub-channels, and the termination unit comprising a tone ordering table and further comprising: receiving means for receiving data to be transmitted over the channel; channel sending means connected to the receiving means and connectable to a communication line for transmitting over the channel the data received by the receiving means, wherein groups of bits to be transmitted over the channel, are each subsequently assigned to one of the sub-channels in accordance with a tone ordering table; channel receiving means connectable to a communication line for receiving data transmitted by a second termination unit over the channel; and tone ordering table change means for changing the tone ordering table without interruption of the data communication, comprising: tone ordering table change request determination means connected to the channel receiving means for determining the reception of a tone ordering table change request sent by the second termination unit; tone ordering table change signalling means connected to the channel sending means for determining the moment of tone ordering table change and signalling the moment to the second termination unit (note that this signalling may be multiplexed with bits coming from the receiving means, or that this signalling may use a dedicated path in the channel which is independent of the tone ordering table, for example signalling using dedicated SYNC symbols); and wherein from the moment of tone ordering table change, the channel sending means assign subsequent bits to be transmitted, in accordance with the tone ordering table determined by the received tone ordering table change request. The moment of tone ordering table change might coincide with signalling the same moment. However, in alternative embodiments, the moment of tone ordering table change occurs later and the signalling of the moment directly or indirectly specifies when the moment occurs. Examples of specifying the moment directly are specifying a delay expressed in a number of bits, or alternatively, expressing a delay in a time unit. An example of specifying the moment indirectly, is specifying a delay in the communication standard.

A second embodiment of the present invention provides a second termination unit arranged for reception of a channel comprising a plurality of frequency multiplexed sub-channels, the channel arranged for transporting data, and the termination unit comprising a tone ordering table, and further comprising: channel receiving means connectable to a communication line for receiving data transmitted by a first termination unit over the channel, wherein the first termination unit assigns groups of bits to be transmitted over the channel each subsequently to one of the sub-channels in accordance with a tone ordering table, and wherein the data received through the sub-channels of the channel is reassembled into a single data stream by reordering the received groups of bits according to the tone ordering table; and channel sending means connectable to a communication line for transmitting over the channel, bits from the termination unit to the first termination unit; tone ordering table determination means connected to the channel receiving means, the tone ordering table determination means arranged to determine a favourable tone ordering table based on the characteristics of the individual sub-channels received by the channel receiving means; tone ordering table change request sending means connected to the tone ordering table determination means and connected to the channel sending means, for sending a tone ordering table change request to the first termination unit, requesting a change of tone ordering table to the new tone ordering table determined by the tone ordering table determination means; and tone ordering table change signalling receiving means connected to the channel receiving means, for receiving a signalling of the moment of tone ordering table change sent by the first termination unit and providing therewith information on the moment of tone ordering table change back to the channel receiving means; wherein from the moment determined by the signalling of the moment of tone ordering table change, the channel receiving means apply the tone ordering table determined by the tone ordering table determination means for each subsequently received bit.

The receiving means are arranged to be connectable to for example a network or end-user equipment. The receiving means receive data to be transmitted over a channel from for example the network or the end-user equipment. A typical example is an ADSL Termination Unit (ATU), specifically an ADSL Termination Unit Central Office (ATU-C), connecting the network of an Internet Service Provider to an ADSL-line. The other end of the ADSL-line is typically terminated by an ADSL Termination Unit Remote (ATU-R), which connects to end-user equipment such as a personal computer. The receiving means in for example a ATU-C receive data from the network of the Internet Service Provider for transmittal to the personal computer of the end-user. In the example of a ATU-R, the receiving means comprise a LAN-port on the ATU-R, connected to the LAN (Local Area Network) of the end-user. The receiving means are connected to channel sending means. Data received by the receiving means is supplied to the channel sending means for subsequent transmittal over a connectable communication line for connecting the termination unit to the second termination unit.

In the above example, the channel is realised by means of a discrete multitone modulated (DMT) signal, wherein the different tones of the DMT-modulation comprise the sub-channels of the channel, transmitted over a twisted pair of copper cable of the xDSL-line.

The second termination unit comprises channel receiving means for receiving the data transmitted by the channel sending means of the first termination unit. Similarly, the first termination unit comprises channel receiving means for receiving data transmitted by channel sending means of the second termination unit. The channel sending means and channel receiving means are arranged to cooperate with channel receiving means respectively channel sending means of the second termination unit. The channel receiving means monitor characteristics (for example the attenuation, the noise, the signal-to-noise-ratio, the stability over time, the quality of the data, the error rate) of the sub-channels on the channel received by the channel receiving means. If it is determined that a change of the tone ordering table is beneficial, the tone ordering table determination means initiate the sending of a request for the change of tone ordering table through the reverse data path (and consequently through the channel sending and channel receiving means in the reverse data path). After the request has been send, the channel receiving means wait for the signalling of the moment of change itself. When this signalling is received, the channel receiving means switches to the new tone ordering table (the switching whereto was requested) as soon as the signalled moment of change occurs.

The tone ordering table change request determination means are arranged to determine whether a request for a change of tone ordering table was received through the reverse data path. Therefore, the tone ordering table change request determination means are connected to the channel receiving means of the termination unit. To make the system more robust, the channel sending means optionally transmit an acknowledgement through the channel when a request is received. Next, the tone ordering table change means determine a suitable moment for the change of tone ordering table. Suitable in this context means, allowing both sending and receiving termination unit to prepare for the change of tone ordering table. This specifically applies to the sending termination unit, as the receiving termination unit already started preparing when it determined that a change of tone ordering was favourable.

The moment determined to be suitable by the sending termination unit is signalled to the receiving termination unit. Once the suitable moment occurs, both the channel sending means of the sending termination unit and the channel receiving means of the receiving termination unit switch to the new tone ordering table for subsequent bits.

In communication systems according to the prior art, such as existing xDSL systems, dealing with distortions like time varying attenuation or time varying noise requires a reinitialisation of the DMT-transmitter and DMT-receiver. This reinitialisation inevitably results in a temporary service interruption, meaning an interruption in data communication. With the above described method according to the invention, such a service interruption does not occur. Data is transmitted continuously in the termination units according to the invention.

In a communication system employing DMT-modulation, during initialisation of the terminal units, channel characteristics are determined for each sub-carrier. Based on these characteristics, a bit table, gain table and tone ordering table are determined by determining for each sub-carrier the bit rate and the gain to be applied and the order of the sub-carriers, which results in an optimal parametrisation of the communication system leading to the highest number of bits that can be transferred errorless per unit of time. As soon as the conditions under which the initialisation took place, change, the parametrisation might no longer be optimal. In an embodiment employing the present invention, it is determined if it is advantageous to switch to a new tone ordering table because of a change in characteristics (for example the attenuation, the noise, the signal-to-noise-ratio, the stability over time, the quality of the data, the error rate) in one or more of the sub-carriers received by the channel receiving means. Once it is determined that it is advantageous to switch to another tone ordering table, the present invention initiates the switch of tone ordering table. The switch is further performed without any necessity for an interruption of data communication. This results in a very efficient data transmission in terms of data throughput, even when experiencing changes in noise in part of the sub-channels, without any interruption of service.

In a preferred embodiment of the present invention a termination unit is provided, connectable via a communication line to a further termination unit, wherein the termination unit is arranged to change the tone ordering table for the data being sent by the termination unit in response to a tone ordering table change request received from the further termination unit; and the termination unit is arranged to request a change of tone ordering table for the data received from the further termination unit and apply the requested tone ordering table to data received after the moment determined by the received signalling of the moment of tone ordering table change. This preferred embodiment combines the features of the first and second embodiment allowing, when connected via a communication line to a similar, combined termination unit, a change of tone ordering table in both data directions.

In a further aspect of the present invention, a termination unit is provided, wherein the termination unit is an xDSL Termination Unit, xTU. ADSL and alternative DSL technologies employ DMT-modulation and are typical examples of well suited technologies for applying the present invention.

In a further aspect of the present invention, a system is provided comprising two termination units and a communication line, connecting the two termination units. The two termination units are termination units according to one of the above embodiments, or termination units adapted to execute a method according to one of the methods according to the invention as described below. The present invention makes it possible to optimise the use of the DMT-modulatable channel under time varying frequency specific distortions without interruption of service.

The present invention provides a method for communicating data between a first and a second termination unit over a channel comprising a plurality of sub-channels, wherein the termination units comprise a tone ordering table, the method comprising: changing the tone ordering table in the termination units without interrupting the communication of data between the termination units, by: sending a request for changing the tone ordering table from the first termination unit to the second termination unit while data communication continues; signalling the moment of tone ordering table change from the second termination unit to the first termination unit; at the moment of tone ordering table change, applying, by the second termination unit, the changed tone ordering table to subsequent data communication transmitted from the second termination unit to the first termination unit; and at the moment of tone ordering table change, applying, by the first termination unit, the changed tone ordering table to subsequent data communication received by the first termination unit from the second termination unit.

The present invention further provides a method, further comprising: after receipt of the request by the second termination unit, sending an acknowledgment from the second termination unit to the first termination unit.

In another aspect according to the present invention, a method is provided, wherein sending a request for changing the tone ordering table comprises sending the new tone ordering table specification from a first termination unit to a second termination unit. Allowing the first termination unit to specify a new tone ordering table provides the possibility to specify a tone ordering table that is determined to be particularly beneficial to obtain an optimised data transmission in terms of maximum throughput of data.

In a further aspect according to the present invention, a method is provided, wherein sending the new tone ordering table specification comprises sending a tone ordering table identification identifying an available tone ordering table pre-stored in memory of the termination units. Utilising pre-stored tone ordering tables results in an extremely small overhead for changing the tone ordering table, as the specification of the tone ordering table that is sent is particularly compact. Alternatively, a complete specification of the tone ordering table is sent. Although this alternative method results in more overhead, it provides more freedom in choosing an appropriate tone ordering table, as the choices are not limited to pre-stored tone ordering tables.

In another aspect of the present invention, a method is provided, wherein the sub-channels are created by discrete multi-tone modulation of the channel; the channel is comprised in a xDSL communication system; and the symbols being transmitted by the second termination unit comprise an xDSL-SYNC-symbol, and signalling the moment of tone ordering table change comprises replacing the first suitable xDSL-SYNC-symbol with a phase inverted xDSL-SYNC-symbol. Suitable here has the same meaning as described above.

Further advantages and exemplary embodiments will be described below with reference to the accompanying figures, wherein:
Figure 1 shares DSL system wherein the present invention is employed;
Figure 2 shows a more detailed diagram half the system of Figure 1 wherein the present invention is employed;
Figure 3 shows a signalling diagram according to the present invention;
Figure 4 shows a flow diagram according to a method of the present invention; and
Figure 5 shows a flow diagram of a second method according to the present invention.

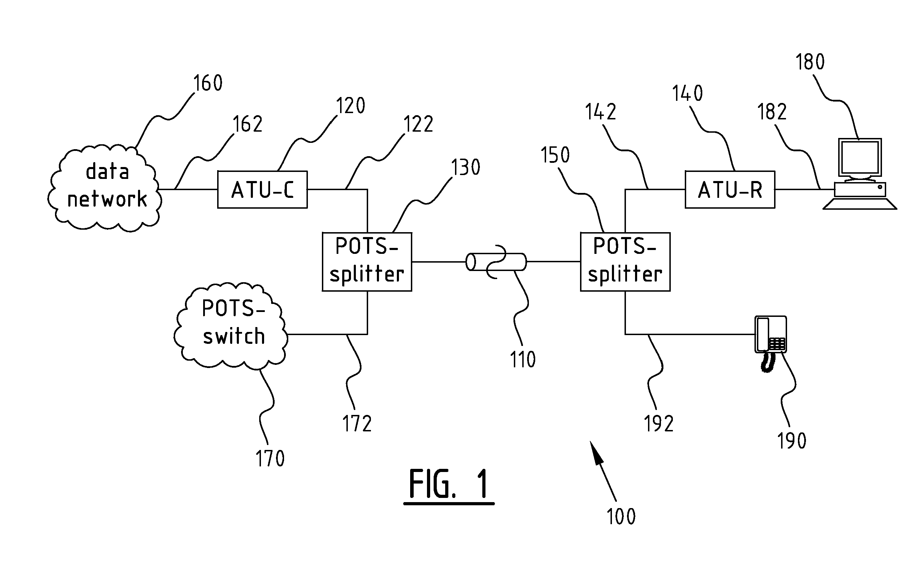

Conventionally, a telephone 190 is directly connected through a copper cable 110 to a public switch telephone service (PSTN). In the example of Figure 1 the telephone switch is a conventional Plain Old Telephone System switch (POTS-switch) 170. The conventional way of providing DSL communication is by sharing the copper cable 110 between the DSL signal and the telephone signal. To prevent interference (cross-talk) of the two signals at either the user-end or the network end, POTS-splitters 130, 150 are provided at each end of the copper cable 110. At the network end the copper cable 110 is connected to the POTS-splitter 130 and through an ATU-C (ADSL termination unit central office) 120 to a data network 160. The data network 160 may, for example, be a network of an internet service provider, ISP, who provides internet connectivity to the user. At the user's end the copper cable 110 is connected through the POTS-splitter 150 and through an ATU-R (ADSL termination unit remote) 140 to end-user equipment 180, such as a personal computer for browsing the internet.

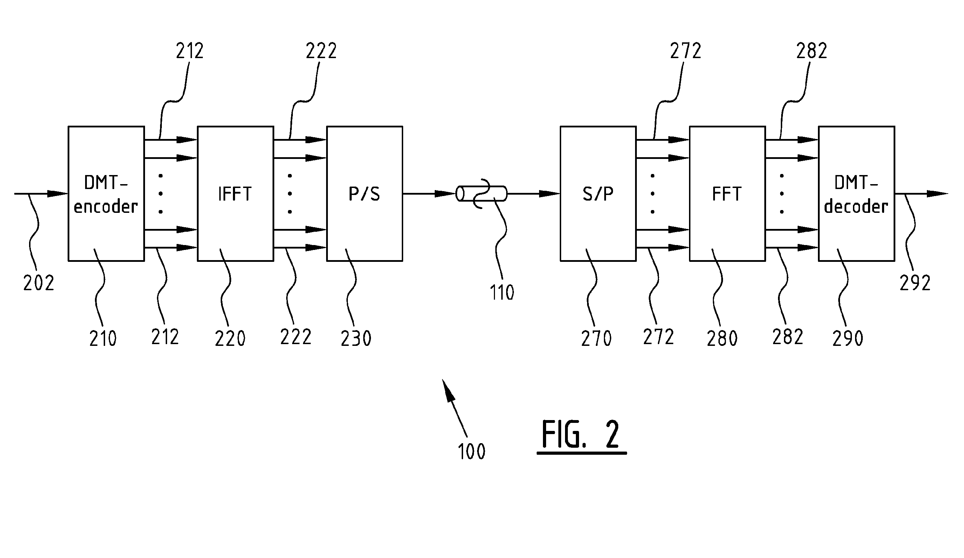

Communication between the data network 160 and the end-user equipment 180 passes through the ATU-C 120, the POTS-splitter 130, the copper cable 110, the POTS-splitter 150, and the ATU-R 140 and vice versa. The elements in the data path between the data network 160 and the end-user equipment 180 directly relevant to the present invention, are shown schematically in Figure 2. The data to be sent enters a first ATU DMT-encoder (discrete multitone modulation encoder) 210, which determines the sub-channel numbers for sending in the data stream. A number of bits is subsequently assigned to each of the determined sub-channels, the number of bits being determined in accordance with a bit loading table. Bit loading tables are known to the man skilled in the art of DMT modulation. Subsequent groups of bits are assigned to sub-channels in accordance with the tone ordering table, the number of bits in a group determined by the bit loading table. The signal then leaves the DMT-encoder 210 through *N* parallel sub-channels, which are provided to an Inverse Fast Fourier Transform IFFT, 220. The IFFT 220 regards the *N* input sub-channels as separate frequency sub-channels and outputs *N* parallel bit streams 222 that are supplied to parallel-to-serial converter 230. The signal as the output by the parallel-to-serial converter 230 is a wideband signal comprised of *N* sub-channels that each carry a part of the original bitstream. This wideband signal is transmitted over the copper cable 110. In the receiving ATU 120, 140 a serial-to-parallel converter converts the wideband signal back to *N* discrete, parallel signals which are supplied to the fast Fourier transform (FFT) module 280. The FFT module 280 converts these *N* parallel signals back to the *N* frequency sub-channels 282 which are fed to the DMT decoder 290. Finally the DMT decoder 290 reorders the N frequency sub-channels back in order to put the bits back into the original order as they were sent.

In its simplest form, the DMT-encoder 210 would be a simple round-robin demultiplexer, directing incoming bits at its input 202 sequentially to respectively the 1st, 2nd, 3rd output 212 and so on till the *N*-th output 212, after which the process starts over again at the 1st output 212. This way the datastream at input 202 is distributed equally over the N outputs 212. However, to cope with, for example, narrowband distortion at the frequency of one or more of the output channels 212, the DMT-encoder 210 is able to adjust the data rate of the individual outputs 212.

During initialisation of the ATUs 120, 140, the characteristics (for example the attenuation, the noise rate, the signal-to-noise-ratio, the quality of the data, the error rate) of the individual sub carriers is determined by the DMT-decoder 290 at the receiving end. Based on this analysis a tone ordering table is determined. The tone ordering table specifies an advantageous distribution of the bits in data stream in input 202 over the individual outputs 212 of the DMT-encoder 210, this means the distribution over the sub carriers in the wideband signal transmitted over the copper cable 110. The DMT-decoder 290 at the receiving ATU sends an specification of the determined tone ordering table to the DMT-encoder 210 at the sending ATU 120, 140 in order to allow the latter to use the advantageous bit distribution and allow the DMT-decoder 290 at the receiving ATU 120, 140 to reassemble the original data stream by rearranging the received bits in the order in which they were sent.

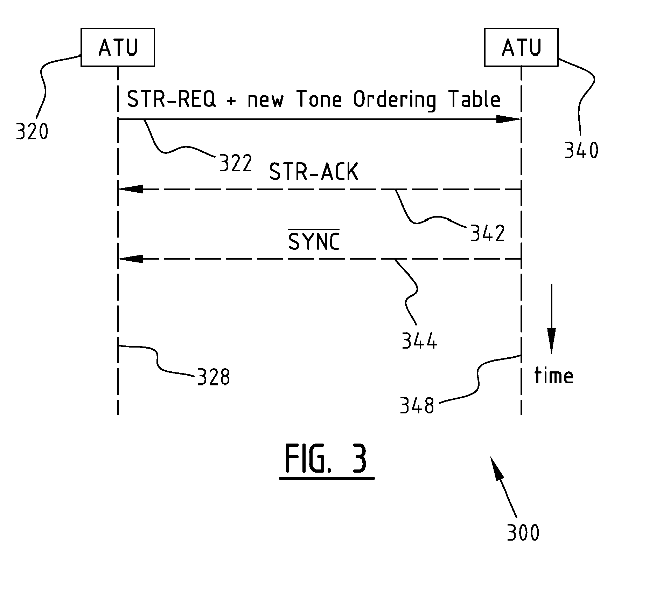

The present invention allows the ATUs 120, 140 to cope with distortion on the sub channels changing over time during data transmission without interruption of the data communication between the ATUs 120, 140. If an ATU 320 (see signalling diagram, figure 3) determines that changing the tone ordering table would be advantageous, it signals the other ATU 340 by means of a Seamless Tone Reordering request (STR-REQ) 322. When interpreting figure 3, one should keep in mind that although ATU 320 initiates the Seamless Tone Reordering by sending the STR-REQ 322, the ATU 320 is the *receiving* ATU and not the sending ATU, as the receiving ATU 320 is the ATU that is capable of assessing whether tone reordering is advantageous. Together with the STR-REQ 322, an specification of the tone ordering table is sent. If the receiving ATU 340 accepts the tone reordering, it acknowledges by sending a Seamless Tone Reordering acknowledgement (STR-ACK) 342 back to the first ATU 320. In the meantime exchange of data continues in both directions. Furthermore, the change of tone ordering table has not occurred yet, and the ATU 340 continues sending data according to the tone ordering table that was in use right before the STR-REQ 322 was sent. Only when the ATU 340 determines a next suitable SYNC-symbol position, the change of tone ordering table is initiated by sending a 180° phase inverted SYNC-symbol (S̅Y̅N̅C̅) 344. All symbols following the phase inverted SYNC-symbol are sent using the new tone ordering table. In this particular case, the signalling of the moment of tone ordering table change coincides with this moment itself.

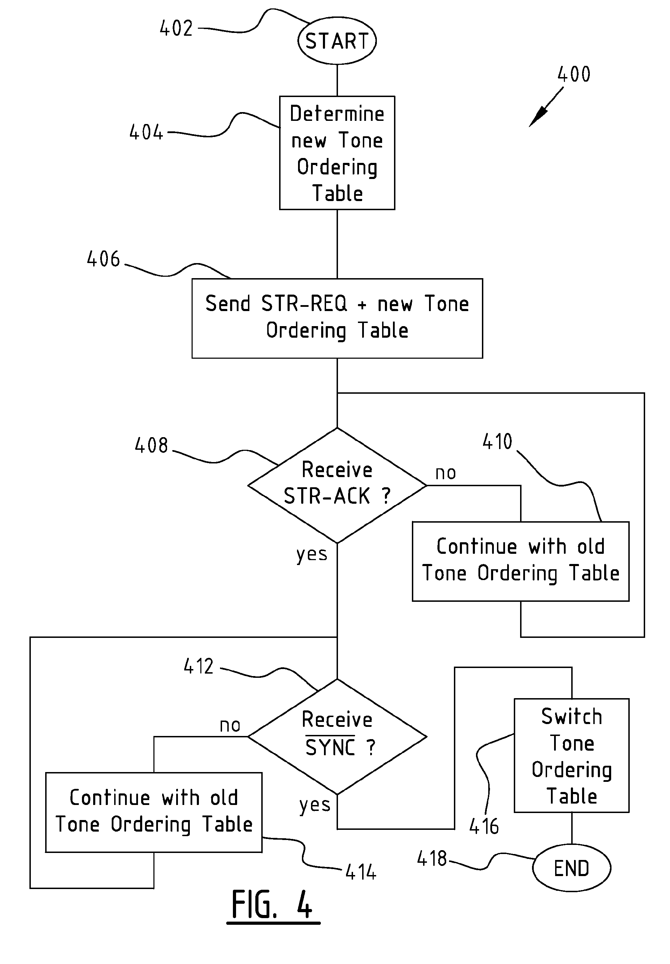

This very same process is also visualised in the flow chart of figure 4 from the perspective of the receiving ATU 320. At some point in time the receiving ATU 320 determines that it is advantageous to change the tone ordering table. It then invokes process 400. The process starts 402 and determines the new tone ordering table 404. Once a new tone ordering table has been identified an STR-REQ 322 is sent 406 together with an specification of the new tone ordering table to the sending ATU 340 to request switching to the new tone ordering table. The new tone ordering table can be identified by sending a full specification of the bit loading per sub carrier, or by sending an identifier that identifies a tone ordering table that is predetermined and stored in for example an internal storage of the ATUs 320, 340. After sending the STR-REQ 322 the ATU 320 analyses every received symbol and determines 408 whether the received symbol is an STR-ACK 342, indicating the acknowledgement of the seamless tone reordering by ATU 340. If the received symbol is not an STR-ACK 342, the ATU 320 continues 410 receiving symbols according to the old tone ordering table. As soon as an STR-ACK 342 has been received by ATU 320, it start waiting for a phase inverted SYNC-symbol S̅Y̅N̅C̅. Every symbol that is now received by ATU 320 is analysed 412. If it is determined that the received symbol is not a phase inverted SYNC-symbol S̅Y̅N̅C̅ 344, the ATU 320 continues 414 receiving symbols according to the old tone ordering table. As soon as it is determined that the received symbol is a phase inverted SYNC-symbol S̅Y̅N̅C̅, the ATU 320 switches 416 to using the new tone ordering table. That ends 418 the seamless tone reordering procedure for the receiving ATU 320.

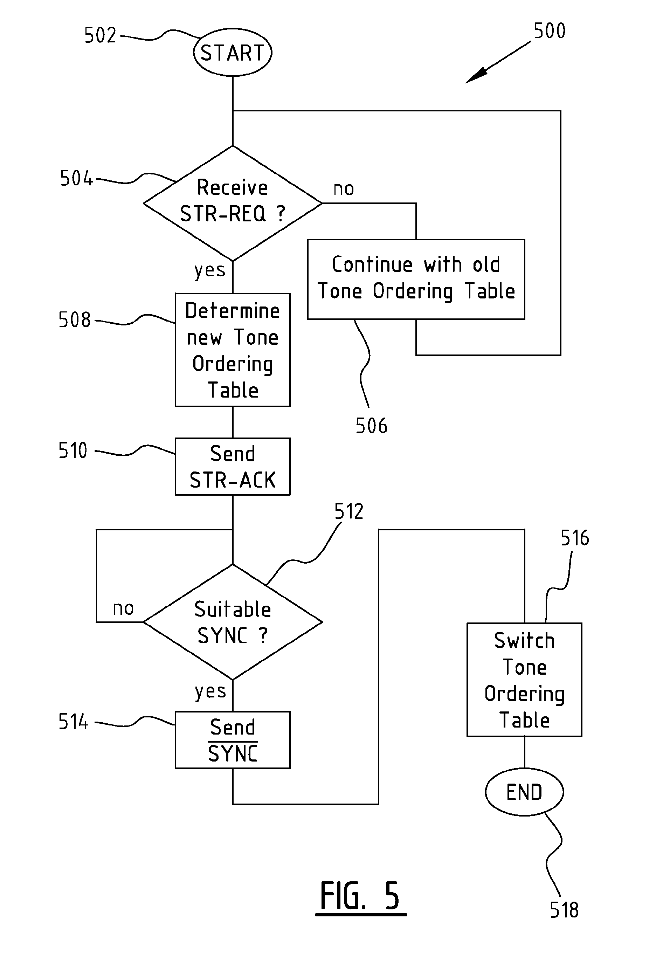

The seamless tone reordering procedure for the sending ATU described in figure 5 starts at 502. Initially, the sending ATU waits 504 for a Seamless Tone Reordering Request STR-REQ 322. During waiting, the sending ATU transmits symbols making up the data stream to the receiving ATU as long as such symbols are being provided to it at its data input. As long as no STR-REQ 322 is received from the receiving ATU 320, the sending ATU 340 will keep on sending symbols from the data stream using the current tone ordering table. If a Seamless Tone Reordering Request STR-REQ 322 has been received, the sending ATU 320 determines 508 the new tone ordering table to be used as identified with the Seamless Tone Reordering Request STR-REQ 322. Next, the sending ATU 340 acknowledges the Seamless Tone Reordering Request STR-REQ 322 with a Seamless Tone Reordering Acknowledgement STR-ACK 342. While continuing sending symbols from the data stream, the sending ATU 340 waits 512 for a suitable SYNC-symbol. As long as no suitable SYNC-symbol is determined the sending ATU 340 continues transmitting supplied input data stream symbols using the old tone ordering table. When a suitable SYNC-symbol is determined, the sending ATU 340 sends 514 a 180° phase inverted SYNC-symbol S̅Y̅N̅C̅ 344 instead of the SYNC-symbol. Right after sending the phase inverted SYNC-symbol S̅Y̅N̅C̅ 344, the sending ATU 340 switches 516 to the new tone ordering table and all subsequent symbols are sent using the new tone ordering table, until again a next Seamless Tone Reordering procedure is performed.

The embodiments described in the description and shown in the figures are described respectively shown only for exemplary purposes. The man skilled in the art will appreciate that many adaptions and modifications are possible within the scope of the present invention. The claimed protection is therefore not limited by the exemplary embodiments, but is determined by the accompanying claims.

## Claims

1. Termination unit, arranged for communication of data over a channel comprising a plurality of frequency multiplexed sub-channels, and the termination unit comprising a tone ordering table and further comprising:
- receiving means for receiving data to be transmitted over the channel;
- channel sending means connected to the receiving means and connectable to a communication line for transmitting over the channel the data received by the receiving means, wherein groups of bits to be transmitted over the channel, are each subsequently assigned to one of the sub-channels in accordance with a tone ordering table;
- channel receiving means connectable to a communication line for receiving data transmitted by a further termination unit over the channel; and
- tone ordering table change means for changing the tone ordering table without interruption of the data communication, comprising:
- tone ordering table change request determination means connected to the channel receiving means for determining the reception of a tone ordering table change request sent by the further termination unit;
- tone ordering table change signalling means connected to the channel sending means for determining the moment of tone ordering table change and signalling the moment to the further termination unit; and
wherein from the moment of tone ordering table change, the channel sending means assign subsequent bits to be transmitted, in accordance with the tone ordering table determined by the received tone ordering table change request.

2. Termination unit arranged for reception of data over a channel comprising a plurality of frequency multiplexed sub-channels, and the termination unit comprising a tone ordering table, and further comprising:
- channel receiving means connectable to a communication line for receiving data transmitted by a further termination unit over the channel, wherein the further termination unit assigns groups of bits to be transmitted over the channel each subsequently to one of the sub-channels in accordance with a tone ordering table, and
wherein the data received through the sub-channels of the channel is reassembled into a single data stream by reordering the received groups of bits according to the tone ordering table; and
- channel sending means connectable to channel communication line for transmitting over the channel, bits from the termination unit to the further termination unit;
- tone ordering table determination means connected to the channel receiving means, the tone ordering table determination means arranged to determine a favourable tone ordering table based on the characteristics of the individual sub-channels received by the channel receiving means;
- tone ordering table change request sending means connected to the tone ordering table determination means and connected to the channel sending means, for sending a tone ordering table change request to the further termination unit requesting a change of tone ordering table to the new tone ordering table determined by the tone ordering table determination means; and
- tone ordering table change signalling receiving means connected to the channel receiving means, for receiving a signalling of the moment of tone ordering table change sent by the further termination unit and providing therewith information on the moment of tone ordering table change back to the channel receiving means;
wherein from the moment determined by the signalling of the moment of tone ordering table change, the channel receiving means apply the tone ordering table determined by the tone ordering table determination means for each subsequently received bit.

3. Termination unit according to claim 1 and 2, connectable via a communication line to a further termination unit, wherein
the termination unit is arranged in accordance with claim 1 to change the tone ordering table for the data being sent by the termination unit in response to a tone ordering table change request received from the further termination unit; and
the termination unit is arranged in accordance with claim 2 to request a change of tone ordering table for the data received from the further termination unit and apply the requested tone ordering table to data received after the moment determined by the received signalling of the moment of tone ordering table change.

4. Termination unit according to claim 3, wherein the termination unit is an xDSL Termination Unit, xTU.

5. System comprising two termination units according to claim 3 and a communication line, connecting the two termination units.

6. Method for communicating data between a first and a second termination unit over a channel comprising a plurality of sub-channels, wherein the termination units comprise a tone ordering table, the method comprising:
changing the tone ordering table in the termination units without interrupting the communication of data between the termination units, by:
- sending a request for changing the tone ordering table from the first termination unit to the second termination unit while data communication continues;
- signalling the moment of tone ordering table change from the second termination unit to the first termination unit;
- at the moment of tone ordering table change, applying, by the second termination unit, the changed tone ordering table to subsequent data communication transmitted from the second termination unit to the first termination unit; and
- at the moment of tone ordering table change, applying, by the first termination unit, the changed tone ordering table to subsequent data communication received by the first termination unit from the second termination unit.

7. Method according to claim 6, further comprising:
- after receipt of the request by the second termination unit, sending an acknowledgment from the second termination unit to the first termination unit.

8. Method according to claim 6, wherein sending a request for changing the tone ordering table comprises sending the new tone ordering table specification from a first termination unit to a second termination unit.

9. Method according to claim 8, wherein sending the new tone ordering table specification comprises sending a tone ordering table identification identifying an available tone ordering table pre-stored in memory of the termination units.

10. Method according to claim 6, wherein
the sub-channels are created by using discrete multi-tone modulation;
the channel is comprised in a xDSL communication system; and
the symbols being transmitted by the second termination unit comprise an xDSL-SYNC-symbol, and signalling the moment of tone ordering table change comprises replacing the first suitable xDSL-SYNC-symbol with a phase inverted xDSL-SYNC-symbol.
